# EUROPÄISCHE PATENTSCHRIFT

(11) **EP 2 802 780 B1**
(45) Veröffentlichungstag und Bekanntmachung des Hinweises auf die Patenterteilung: **14.09.2016**
(21) Anmeldenummer: 12812253.8
(22) Anmeldetag: 20.12.2012
(51) Int. Cl.: F04D 29/38, F04D 29/68

(54) **AXIAL- ODER DIAGONALLÜFTER MIT STOLPERKANTE AUF DER LAUFSCHAUFEL-SAUGSEITE**
AXIAL OR DIAGONAL FAN WITH TRIP EDGE ON THE BLADE SUCTION SIDE
VENTILATEUR AXIAL OU DIAGONAL AVEC ARÊTE DE DÉTENTE SUR L'EXTRADOS DE L'AUBE

(30) Priorität: 12.01.2012 DE 102012000376
(43) Veröffentlichungstag der Anmeldung: 19.11.2014
(73) Patentinhaber: ebm-papst St. Georgen GmbH & Co. KG, 78112 St. Georgen (DE)
(72) Erfinder: RAGG, Peter, 78141 Schönwald (DE); STADLER, Michael, A-8010 Graz (AT)
(74) Vertreter: Raible Deissler Lehmann Patentanwälte
(86) Internationale Anmeldenummer: PCT/EP2012/076521
(87) Internationale Veröffentlichungsnummer: WO 2013/104513

(56) Entgegenhaltungen:
- FR-A1- 2 282 548
- JP-A- 3 206 395
- JP-A- 7 145 798
- JP-A- 2000 345 995
- JP-B- 7 086 359
- US-A- 3 578 264

## Beschreibung

Die Erfindung betrifft einen Axial- oder Diagonalventilator mit einem Lüfterrad, das auch als Laufrad bezeichnet wird.

Auf der Saugseite der Laufschaufeln bildet sich im Betrieb eine Grenzschicht aus. Bei einem Ventilator wirkt auf diese Grenzschicht ein vom Ventilator erzeugter positiver Druckgradient, und die Folge hiervon ist, dass sich die Grenzschicht ablösen kann. Die Nachteile einer solchen Ablösung der Grenzschicht sind höherer Widerstand, und Auftriebsverlust (Englisch: stall). Der Wirkungsgrad eines Ventilators wird hierdurch nachteilig beeinflusst, und seine Schallemission nimmt zu.

Um die Strömungsablösung zu verhindern bzw. den Beginn der Strömungsablösung in Richtung zur Austrittskante des betreffenden Flügels zu verschieben, wurden so genannte Turbulatoren entwickelt. Dieser Begriff bedeutet Maßnahmen zum Erzwingen eines Umschlags von laminarer Strömung zu turbulenter Strömung. Der Vorteil einer turbulenten gegenüber einer laminaren Grenzschicht liegt in ihrer höheren kinetischen Energie, wodurch sie einen größeren Druckanstieg ohne Ablösung überwinden kann. Solche Turbulatoren haben aber für schnell drehende Ventilatoren keinen Sinn, da bei ihnen die Strömung ohnedies turbulent ist.

Die FR 2 282 548 A1 zeigt einen Ventilator mit profilierten Rotorblättern, die eine Zuströmkante und eine Austrittskante haben, zwischen welchen sich an unterschiedlichen Stellen erhabene, gewellte Bereiche befinden.

Es ist deshalb eine Aufgabe der Erfindung, einen neuen Ventilator mit verbesserten Eigenschaften bereit zu stellen.

Diese Aufgabe wird gelöst durch den Gegenstand des Patentanspruchs 1.

Die Erfindung verwendet zur Verbesserung der Strömungsverhältnisse auf der Schaufeloberfläche eine Diskontinuität auf der Schaufeloberfläche. Diese wird in der Fachsprache z.B. als Abrisskante, Stufe oder "Stolperdraht" bezeichnet. Konventionelle Stolperdrähte verlaufen radial und bewirken - bei langsam drehenden Ventilatoren - in der Nähe der Zuströmkante (Eintrittskante) einer Laufschaufel einen Umschlag von laminarer zu turbulenter Strömung. Es hat sich gezeigt, dass sich bei einem solchen Stolperdraht die Strömung je nach Belastung der Laufschaufel an der Saugseite des Schaufelprofils ablösen wird. Ab diesem Punkt ist das Profil von einer plötzlich dicker werdenden, nicht anliegenden und ungeordneten Strömung umgeben. Für die angrenzende Strömung hat dies die gleiche Wirkung, als wenn die Laufschaufel wesentlich dicker wäre. Dadurch werden die Schaufelkanäle des Ventilators teilweise oder ganz versperrt, und der geförderte Volumenstrom nimmt folglich ab. (Unter "Schaufelkanal" versteht man den Kanal zwischen zwei benachbarten Laufschaufeln).

Aus diesem Grund folgt die Form einer Kontur optimierten Ablösekante der Kontur des Ablösegebiets in der Nähe der Austrittskante der betreffenden Schaufel. Dadurch wird die Grenzschicht an der Stelle, wo die Ablösung beginnen würde, mit zusätzlicher Energie versorgt. Hinter der Stufe bildet sich eine aus Mikrowirbeln bestehende Rezirkulationszone, auf der die angrenzende Strömung reibungsarm gleiten kann. Anders als bei einer konventionellen Ablösekante verlagert sich die Ablösezone entweder stärker zur Austrittskante des betreffenden Flügels als durch eine Stufe von konventioneller Form, oder die Ablösezone wird völlig eliminiert. Damit ergeben sich folgende Vorzüge:
- Druckgewinn von ca. 6,3 % (ermittelt durch CFD-Simulation).
- Reduktion der Schallleistung im frei ausblasenden Bereich, also Reduzierung der Lüftergeräusche.
(CFD-Simulation bedeutet Simulation durch numerische Strömungsmechanik.)

Durch eine kontur-optimierte Ablösekante auf der Saugseite der betreffenden Laufschaufel bildet sich stromabwärts entlang der Schaufeloberfläche (auf der Saugseite) ein ausgedehntes Rezirkulationsgebiet. Dieses reduziert die Reibung für die darüber liegenden Fluid-Schichten. Dadurch kann die Grenzschicht erneut mit kinetischer Energie versorgt werden. Ihr energetisches Gleichgewicht verlagert sich in einen stabilen Bereich, und der Strömungsabriss wird in eine stromabwärts liegende Zone verschoben. Dies verlängert den wirksamen Bereich der Laufschaufel und leitet somit die Strömung entsprechend ihrer Austrittskontur über diese Laufschaufel. Da diese nun für den gesamten Betriebsbereich des Ventilators annähernd optimal angeströmt wird, reduziert sich die vom Ventilator emittierte Schallleistung in den Bereichen abseits des Auslegungspunktes.

Die Form der Ablösekante ist im Idealfall der Kontur der Ablösezone im Auslegungspunkt angepasst, und sie beschreibt eine Parallelkurve zur Kontur des Ablösegebiets im Abstand DS von ca. 1 bis 2 % des Durchmessers D des Ventilatorrades. Das ist notwendig, um eine Wirksamkeit in den vom Auslegungspunkt abweichenden Betriebszuständen zu erreichen. Im Allgemeinen hat die Ablösekante daher die Form eines gestreckten S, das etwa parallel zur Ablösekante der betreffenden Laufschaufel verläuft.

Weitere Einzelheiten und vorteilhafte Weiterbildungen der Erfindung ergeben sich aus den im Folgenden beschriebenen und in der Zeichnung dargestellten, in keiner Weise als Einschränkung der Erfindung zu verstehenden Ausführungsbeispielen, sowie aus den Unteransprüchen. Es zeigt:
- Fig. 1: eine Darstellung einer bevorzugten Ausführungsform des Lüfterrads eines Axiallüfters, wobei die Ablösekante und die an ihr auftretende Strömung nur für eine Laufschaufel dargestellt sind,
- Fig. 2: eine Darstellung der Wirbelbildung bei einer konventionellen Laufschaufel (Fig. 2a)) und bei einer verbesserten Laufschaufel (Fig. 2b)),
- Fig. 3: die Darstellung der bevorzugten Zone einer Laufschaufel, in welcher Zone die S-förmige Ablösekante bevorzugt angeordnet wird,
- Fig. 4: ein Diagramm, welches die erzielbaren Vorteile zeigt,
- Fig. 5: die Explosionsdarstellung eines Lüfters, bei welchem auf der Saugseite der Laufschaufeln entsprechende "Stolperdrähte" vorgesehen sind, und
- Fig. 6a) bis 6d): ein Struktogramm zur Erläuterung der Erfindung.

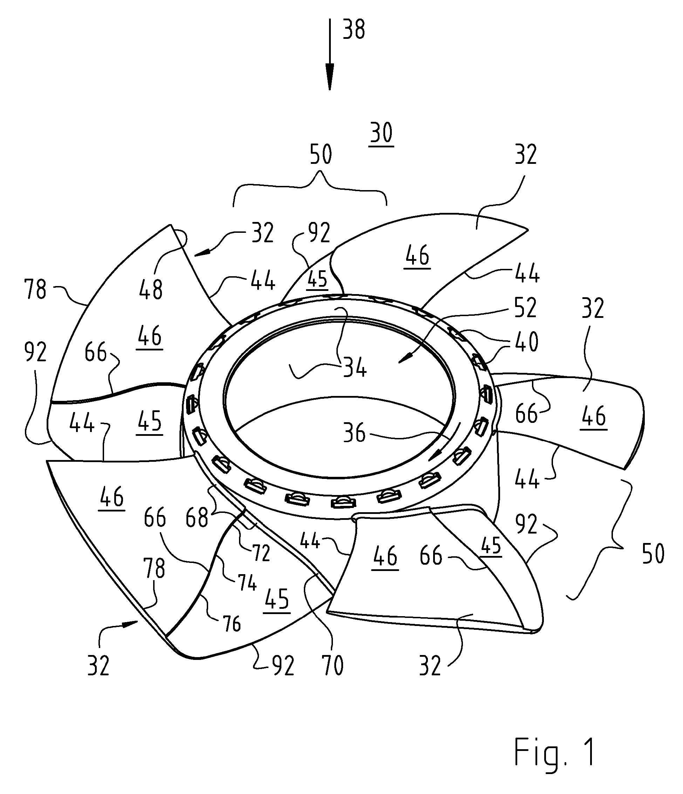

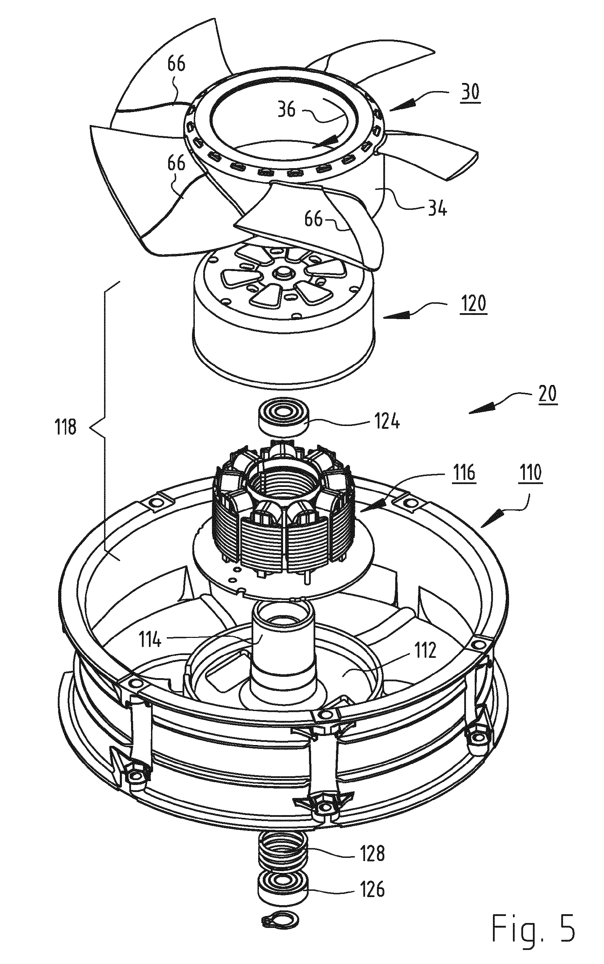

**Fig. 1** zeigt die wesentlichen Teile eines Laufrads (Lüfterrads) 30 für einen Axialventilator, wie er beispielhaft in Fig. 5 in einer Explosionsdarstellung gezeigt ist.

Das Laufrad 30 hat bei diesem Beispiel fünf profilierte Laufschaufeln (Flügel) 32, die mit einer Nabe 34 verbunden sind. Die Drehrichtung des Laufrads 30 ist mit 36 bezeichnet und verläuft bei diesem Beispiel im Uhrzeigersinn, wenn das Laufrad 30 in Richtung eines Pfeils 38 von oben betrachtet wird.

Die Nabe 34 hat Öffnungen 40, in welche beim Auswuchten so genannte Auswuchtgewichte eingeschoben werden können, sofern eine Unwucht festgestellt wird.

Da die Laufschaufeln 32 meistens identisch sind und gleiche oder ähnliche Winkelabstände voneinander haben, genügt es, eine der Laufschaufeln 32 näher zu betrachten, die in Fig.1 unten links dargestellt ist. Diese wird gewöhnlich zusammen mit der Nabe 34 und den anderen Laufschaufeln 32 hergestellt, häufig als Spritzgussteil aus einem geeigneten Kunststoff oder einem geeigneten Metall.

Die Laufschaufeln 32 haben Zuströmkanten (Eintrittskanten) 44, die hier leicht gesichelt sind. Die in Fig. 1 sichtbaren Oberseiten der Laufschaufeln 32 sind die Saugseiten 46 dieser Laufschaufeln 32. Die in Fig. 1 nicht sichtbaren Unterseiten 48 der Laufschaufeln 32 sind die Druckseiten dieser Laufschaufeln 32. Zwischen benachbarten Laufschaufeln 32 erstrecken sich Schaufelkanäle 50, durch welche die gepumpte Luft strömt. Diese Schaufelkanäle 50 sollten möglichst frei von Behinderungen für die Strömung sein, damit der Lüfter (Ventilator) 20 auf effektive Weise die Luft oder ein sonstiges Gas in Richtung des Pfeils 38 von der Saugseite 52 zur Druckseite 54 transportieren kann.

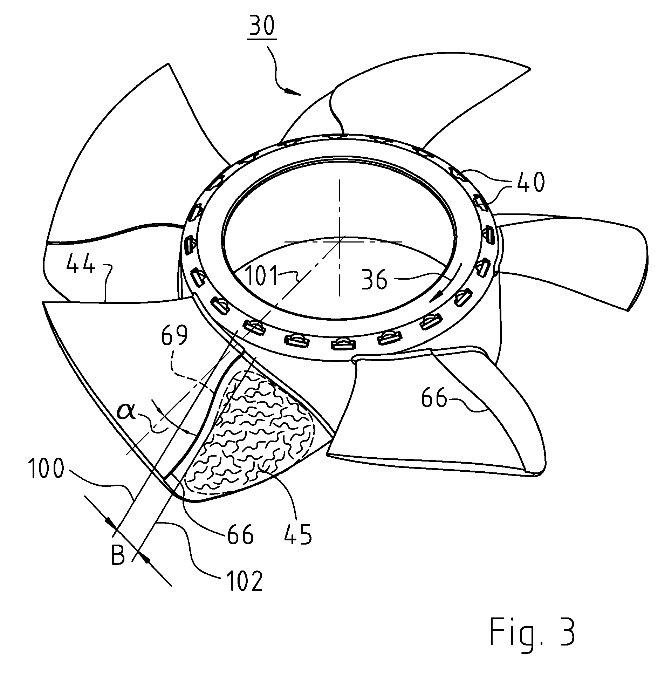

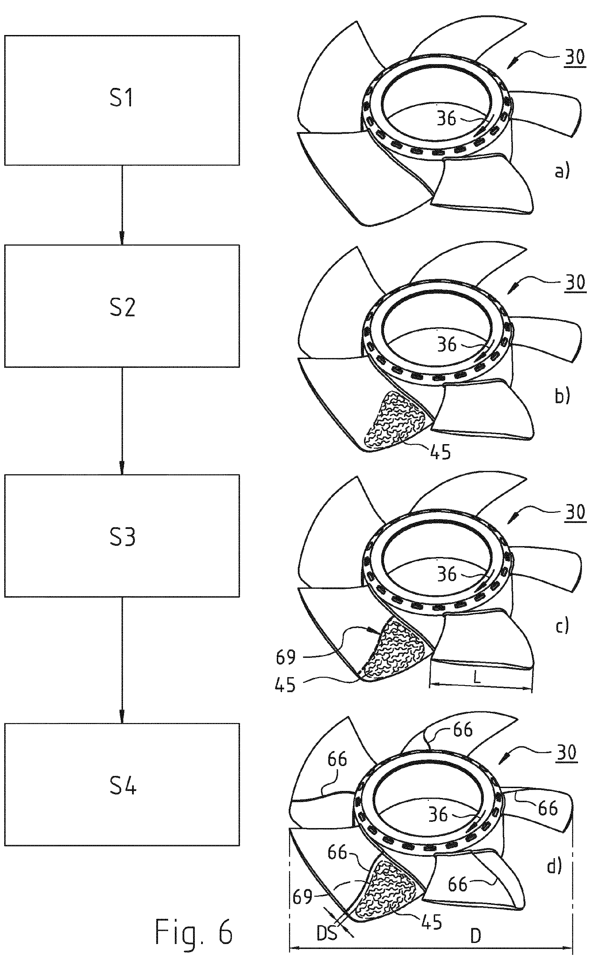

Gemäß Fig. 1 verläuft die Luftströmung 60 auf der Saugseite (Oberseite) 46 einer Laufschaufel ab deren Zuströmkante 44 zunächst etwa in Umfangsrichtung, und geht dann durch aerodynamische Effekte in einer Ablösezone (Abrissgebiet) 45 in eine mehr nach außen gerichtete Strömung über. Der Übergang findet statt im Bereich einer Ablösekante (Stufe, Kante, Diskontinuität) 66. Diese erstreckt sich von einem Mittelbereich 68 an der Laufschaufelwurzel (Flügelwurzel) 70 und zunächst in einem Bereich 72 mit etwa radialer Richtung, der dann in eine Linkskrümmung 74 übergeht. Diese Linkskrümmung 74 geht dann über in eine Rechtskrümmung 76, die sich etwa bis zum äußeren Rand 78 der betreffenden Laufschaufel 32 erstreckt. Die Ablösekante 66 hat also die Form einer alternierend gekrümmten Kurve, die man auch als in die Länge gestrecktes S bezeichnen könnte. Diese Kurve befindet sich in einem Band B, dessen Begrenzungslinien 100, 102 nach außen hin zwischen 0° und 40° abfallen, vgl. Fig. 3. Zu der Zuströmkante 44 gemessen liegt dieses Band B innerhalb eines Bereichs von 30 ... 100 % der Laufschaufellänge (Flügellänge) L, die in Fig. 6 dargestellt ist.

Die Form der Ablösekante 66 ist im Idealfall an die Kontur der Ablösezone 45 im Auslegungspunkt des Lüfters angepasst. Sie beschreibt eine Parallelkurve zur Kontur der Ablösezone im Abstand von ca. 1 bis 2 % des Laufraddurchmessers D. Dies ist notwendig, um Wirksamkeit auch in den vom Auslegungspunkt abweichenden Betriebszuständen zu erreichen. Im Allgemeinen hat die Ablösekante 66 daher die Form einer alternierend gekrümmten Kurve, wie in Fig. 1 dargestellt.

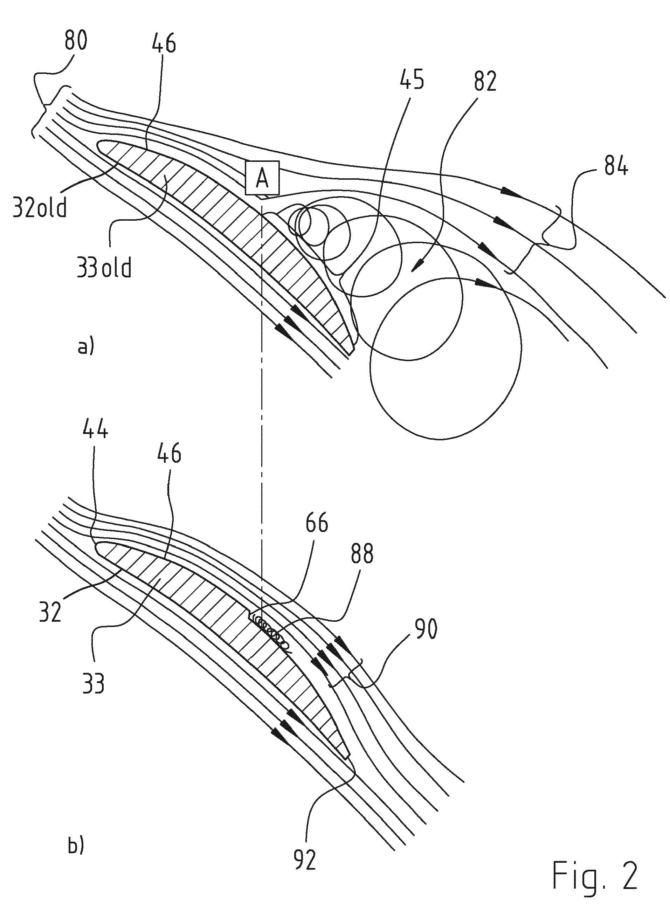

Zur Erläuterung wird auf **Fig. 2** Bezug genommen. Die obere Darstellung gemäß Fig. 2a) zeigt das Profil 33old als Schnitt durch eine Laufschaufel 32old ohne Ablösekante 66, sowie die Luftströmung 80, die diese Laufschaufel 32old umgibt. Die Buchstaben "old" in 32old und 33old zeigen also an, dass keine Ablösekante 66 vorgesehen ist. Je nach Belastung dieser Laufschaufel 32old kann sich die Strömung 80 in der Ablösezone 45 auf der Saugseite 46 des Profils 33old ablösen, z. B. beginnend an der in Fig. 2a) mit "A" bezeichneten Stelle. Die Lage der Ablösezone 45 kann durch eine CFD-Simulation ermittelt werden, oder durch so genannte Anstrichbilder. Dabei wird Öl auf die betreffende Laufschaufel 32old aufgetragen, und der Lüfter 20 wird in Betrieb genommen. So lange das Öl nicht trocken ist, folgt es den Stromlinien auf der Oberfläche der Laufschaufel. In der Zone des Strömungsabrisses verlaufen die Stromlinien 62 nicht mehr in Umfangsrichtung, sondern eher in Richtung radial nach außen.

Ab der Stelle A ist dann beim Profil 33old dieses von einer plötzlich dicker werdenden, nicht anliegenden und ungeordneten Strömung 82 umgeben. Die angrenzende Strömung 84 nimmt nun das Profil 33old der Laufschaufel 32old als wesentlich dicker wahr, als dies tatsächlich der Fall ist. Die Schaufelkanäle 50 des Ventilators, also sein wirksamer Durchlassquerschnitt, werden dadurch verengt, und die Luftleistung (der geförderte Volumenstrom) sinkt.

Um dieses Problem zu vermeiden oder wenigstens zu reduzieren, wird entsprechend Fig. 2b), die das Profil 33 der Laufschaufel 32 dargestellt, eine Ablösekante 66 kurz vor dem Gebiet "A" (vgl. Fig. 2a)) vorgesehen, an dem die Strömung abreißt. Dort wird die Grenzschicht erneut mit kinetischer Energie aufgeladen, und dadurch kann ein Abreißen der Strömung vermieden werden. Hinter der Ablösekante (Stufe) 66 bildet sich eine aus Mikrowirbeln bestehende Rezirkulationszone 88, auf der die angrenzende Strömung 90 reibungsarm gleiten kann. Diese Zone 88 ist auch in Fig. 3 dargestellt. Die Ablösezone 87 verlagert sich entweder noch mehr in Richtung zur Austrittskante 92 als durch einen konventionellen Stolperdraht, oder sie wird sogar völlig eliminiert, vgl. Fig. 2b). Damit ergeben sich folgende Vorzüge:
- Druckgewinn von ca. 6,3 %, ermittelt durch CFD-Simulation
- Reduktion der Schallleistung im frei ausblasenden Bereich.

Dadurch, dass die Grenzschicht unterwegs erneut mit kinetischer Energie versorgt wird, verlagert sich ihr energetisches Gleichgewicht in einen stabilen Bereich, und der Strömungsabriss wird in eine stromabwärts liegende Zone verschoben. Dies verlängert den wirksamen Bereich der Laufschaufel 32 und leitet somit die Strömung entsprechend ihrer Austrittskontur über den Leitapparat. Da dieser nun im gesamten Betriebsbereich des Ventilators annähernd optimal angeströmt wird, reduziert sich die vom Ventilator emittierte Schallleistung in den Bereichen abseits des Auslegungspunktes, also abseits von der Stelle, für die der Ventilator ausgelegt wurde.

In Fig. 1 bildet sich also in dem Gebiet stromabwärts der Ablösekante (Stufe) 66 eine dünne Rezirkulationszone 88 (Fig. 2b)), und diese kann die über ihr liegenden Fluid-Schichten 90 mit zusätzlicher Energie versorgen. Dadurch wird die Strömungsablösung verzögert, d.h. sie wird in Richtung zur Austrittskante 92 verschoben. Diese kann gezackt sein, um Lüftergeräusche zu reduzieren.

Die Ablösekante 86 sollte bereits eine kurze Distanz vor der Ablösezone 45 (Fig. 1) vorhanden sein, wodurch dort ein Abriss der Strömung vermieden werden kann.

Die Austrittskante 92 kann gezackt sein. Diese vorteilhafte Gestaltung hat keinen Einfluss auf die Ablösekante 66. Sie dient dazu, die Geräuschentwicklung im Bereich der Austrittskante 92 zu reduzieren.

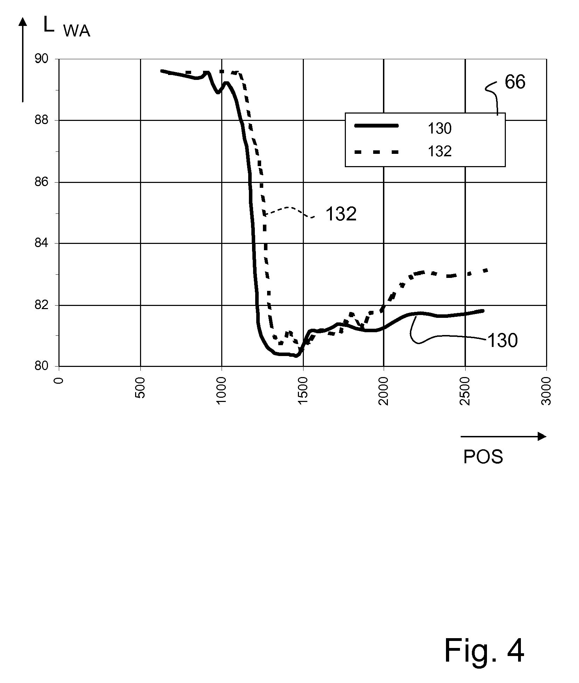

**Fig. 4** zeigt einen Vergleich der Betriebs-Kennlinien. Auf der Abszisse ist die Stellung POS einer (nicht dargestellten) Drossel aufgetragen, und auf der Ordinate ist die Schallleistung L_{WA} in dB/1pW dargestellt. Die durchgezogene Kennlinie 130 ist diejenige eines Ventilators mit Kontur optimierter Ablösekante 66, und die gestrichelte Kennlinie 132 ist diejenige eines Ventilators ohne Abrisskante, wie in Fig. 2a) dargestellt. Der Auslegungspunkt dieses speziellen Ventilators liegt bei der Drosselstellung POS = 1400. Der frei ausblasende Bereich liegt bei der Drosselstellung POS = 2500. Ein Axialventilator wird häufig in dem Bereich zwischen diesen beiden Punkten (1400 und 2500) betrieben, und hier ist der Ventilator mit Ablösekante 66 im Vorteil. (Der Auslegungspunkt dieses speziellen Ventilators liegt bei POS = 1400.)

Fig. 6d zeigt den Durchmesser D des Laufrads 30. Die Ablösekante 66 verläuft in Fig. 6d) nicht direkt am Rand der Ablösezone 45, sondern in einem vorgegebenen Sicherheitsabstand DS von dieser Zone, der etwa ein bis zwei Prozent von D beträgt. Dabei ist die Ablösekante 66 mit großem Vorteil an die Kontur der Ablösezone 45 angepasst, wie in Fig. 6d) dargestellt.

**Fig. 3** zeigt einen Bereich B, in welchem die Ablösekante 66 verläuft. Da die Ablösekante 66 der Kontur der Ablösezone 45 folgt, ist sie gekrümmt und liegt deshalb zwischen den Begrenzungslinien 100 und 102 des Bereichs B. Diese verlaufen bevorzugt nicht exakt radial, sondern ihr innerer Teil liegt, bezogen auf die Drehrichtung 36, weiter vorne als der äußere Teil.

**Fig. 5** zeigt die Explosionsdarstellung eines Ventilators. Unten sieht man das Lüftergehäuse 110, in welchem ein Flansch 112 befestigt ist, der ein Lagerrohr 114 trägt. Auf diesem wird der Innenstator 116 eines ECM 118 (elektronisch kommutierter Motor) 118 befestigt. Der Motor 118 hat einen permanent magnetischen Außenrotor 120, auf dem die Nabe 34 des Laufrads 30 befestigt ist, z.B. durch Kleben oder Aufpressen.

Im Lagerrohr 114 wird die (in Fig. 5 nicht sichtbare) Welle des Außenrotors 120 gelagert. Dazu dienen zwei Kugellager 124, 126, die durch eine Feder 128 gegeneinander verspannt sind.

Die **Fig. 6a)** bis **Fig. 6d)** zeigen in einem Struktogramm Überlegungen bei der Auslegung eines Laufrads 30.

Die Schritte S1 bis S4 haben folgenden Inhalt:
S1 = Schritt 1: Auslegung des Lüfters für einen definierten Arbeitspunkt (Fördermenge, Druck, Drehzahl).
S2 = Schritt 2: Bestimmung der Ablösezone 45.
S3 = Schritt 3: Bestimmung der Form der Kante 69 (strichlierte Linie), die an die Ablösezone 45 grenzt.
S4 = Schritt 4: Sicherheitszuschlag DS definiert die endgültige Form der Ablösekante.

In Fig. 6a) wird der Lüfter für einen definierten Arbeitspunkt ausgelegt, z.B. in Fig. 4 für eine Drosselstellung von POS = 1400, und für eine Kurvenform 130 (Fig. 4) entsprechend einer reduzierten Lautstärke, besonders im Bereich von POS = 1400 ... 2500, wobei POS = 2500 dem frei ausblasenden Bereich entspricht. Z.B. kann auch ein existierender Lüftertyp gemäß der Erfindung so verbessert werden, dass seine Schallleistung ohne Mehrkosten sinkt.

In Fig. 6b) wird die Lage der Ablösezone 45 bestimmt, z.B. durch so genannte Anstrichbilder, wie bereits beschrieben. Auch eine CFD-Simulation ist möglich, um die Lage der Ablösezone 45 zu bestimmen.

Die Ablösezone 45 hat eine Grenze 69, die in Fig. 6d) dargestellt ist und die sich je nach den Betriebsbedingungen etwas verändern kann. Deshalb wird in Fig. 6d) eine kleine Sicherheitszone DS addiert, um die endgültige Form der Ablösekante 66 zu erhalten. Dabei beträgt der Abstand DS der Sicherheitszone in vielen Fällen 1 bis 2 % des LaufradDurchmessers D, der in Fig. 6d) eingezeichnet ist. Naturgemäß wird die ermittelte Lage der Ablösekante 66 auch durch Versuche kontrolliert und ggf. weiter verfeinert.

Die Ablösekante 66 hat die Form einer alternierend gekrümmten Kurve und verläuft im Allgemeinen parallel zur Grenze 69 der Ablösezone 45.

Auf diese Weise erweist sich die Realisierung der Erfindung als sehr einfach und kann ggf. weitgehend automatisiert werden. - Wenn bei der Herstellung des Laufrads Kunststoff verwendet wird, kann die Ablösekante z.B. beim Spritzgießen gefertigt werden.

Die Figuren und die Beschreibung zeigen einen Axial- oder Diagonalventilator mit einem Laufrad 30, das mit profilierten Laufschaufeln 32 versehen ist, die jeweils eine Saugseite 46, einen in Drehrichtung 36 gesehen vorne gelegenen Abschnitt mit einer Zuströmkante 44 und einen bezogen auf die Drehrichtung 36 hinten gelegenen Abschnitt mit einer Austrittskante 92 aufweisen, zwischen welchen sich eine Ablösekante 66 befindet, die im Meridianschnitt eine S-förmige Kontur aufweist, welche Kontur sich innerhalb eines Bandes B befindet, das, von der Zuströmkante 44 aus gemessen, innerhalb eines Bereichs von 30 % bis 100 % der Länge L einer Laufschaufel 32 liegt.

Bevorzugt ist das Band B durch Begrenzungslinien 100, 102 definiert, welche mit einer radial zum Laufrad 30 durch die betreffende Laufschaufel 32 verlaufenden Linie 101 einen Winkel α einschließt, der zwischen etwa 0° und etwa 30° relativ zu dieser Linie 101 beträgt.

Bevorzugt ist die Ablösekante 66 als Stufe in der Saugseite 46 der zugeordneten Laufschaufel 32 ausgebildet.

Bevorzugt verläuft die Ablösekante 66 von der radial inneren Seite einer Laufschaufel 32 auf deren Saugseite 46 in Richtung zur radial äußeren Seite dieser Laufschaufel 32.

Erfindungsgemäß verläuft die Ablösekante 66 von der radial inneren Seite einer Laufschaufel 32 etwa in Form eines lang gestreckten S zur radial äußeren Seite dieser Laufschaufel 32. Bevorzugt erstreckt sich das lang gestreckte S der Ablösekante 66 auf seiner radial inneren Seite bis zu einem in Bezug auf deren Umfangserstreckung mittleren Bereich 68 der zugeordneten Laufschaufel 32.

Bevorzugt erstreckt sich das lang gestreckte S auf seiner radial äußeren Seite bis zu einem Bereich der Laufschaufel 32, der zwischen deren Austrittskante 92 und einem mittleren Bereich der Umfangserstreckung der Laufschaufel 32 liegt.

Bevorzugt verläuft die Ablösekante 66 überwiegend in einem Abstand DS von der Kontur der Ablösezone 45 und zumindest auf einem überwiegenden Teil ihrer Längserstreckung außerhalb der Ablösezone 45.

Bevorzugt beträgt der Abstand DS von der Kontur der Ablösezone 45 etwa ein bis zwei Prozent des Durchmessers D des Laufrads 34.

Naturgemäß sind im Rahmen der vorliegenden Erfindung vielfache Abwandlungen und Modifikationen möglich, sofern sie innerhalb des von den beiliegenden Ansprüchen definierten Gegenstandes liegen.

## Patentansprüche

1. Axial- oder Diagonalventilator mit einem Laufrad (30), das mit profilierten Laufschaufeln (32) versehen ist, die jeweils eine Saugseite (46), einen in Drehrichtung (36) gesehen vorne gelegenen Abschnitt mit einer Zuströmkante (44) und einen bezogen auf die Drehrichtung (36) hinten gelegenen Abschnitt mit einer Austrittskante (92) aufweisen, zwischen welchen sich eine Ablösekante (66) befindet, die im Meridianschnitt eine S-förmige Kontur aufweist, welche Kontur sich innerhalb eines Bandes (B) befindet, das, von der Zuströmkante (44) aus gemessen, innerhalb eines Bereichs von 30 % bis 100 % der Länge (L) einer Laufschaufel (32) liegt,
wobei die Ablösekante (66) von der radial inneren Seite einer Laufschaufel (32) etwa in Form eines lang gestreckten S zur radial äußeren Seite dieser Laufschaufel (32) verläuft.

2. Ventilator nach Anspruch 1, bei welchem das Band (B) durch Begrenzungslinien (100, 102) definiert ist, welche mit einer radial zum Laufrad (30) durch die betreffende Laufschaufel (32) verlaufenden Linie (101) einen Winkel (α) einschließt, der zwischen etwa 0° und etwa 30° relativ zu dieser Linie (101) beträgt.

3. Ventilator nach Anspruch 1 oder 2, bei welchem die Ablösekante (66) als Stufe in der Saugseite (46) der zugeordneten Laufschaufel (32) ausgebildet ist.

4. Ventilator nach einem der Ansprüche 1 bis 3 , bei welchem die Ablösekante (66) von der radial inneren Seite einer Laufschaufel (32) auf deren Saugseite (46) in Richtung zur radial äußeren Seite dieser Laufschaufel (32) verläuft.

5. Ventilator nach einem der vorhergehenden Ansprüche, bei welchem sich das lang gestreckte S der Ablösekante (66) auf seiner radial inneren Seite bis zu einem in Bezug auf deren Umfangserstreckung mittleren Bereich (68) der zugeordneten Laufschaufel (32) erstreckt.

6. Ventilator nach einem der vorhergehenden Ansprüche, bei welchem sich das lang gestreckte S auf seiner radial äußeren Seite bis zu einem Bereich der Laufschaufel (32) erstreckt, der zwischen deren Austrittskante (92) und einem mittleren Bereich der Umfangserstreckung der Laufschaufel (32) liegt.

7. Ventilator nach einem der vorhergehenden Ansprüche, welcher für einen vorgegebenen Arbeitspunkt ausgelegt ist, bei welchem Ventilator die Ablösekante (66) überwiegend in einem Abstand (DS) von der Kontur einer Ablösezone (45) und zumindest auf einem überwiegenden Teil ihrer Längserstreckung außerhalb der Ablösezone (45) verläuft, welche Ablösezone (45) ein entsprechender Ventilator, der Laufschaufeln (32old) ohne Ablösekante (66) hat, in dem vorgegebenen Arbeitspunkt aufweist.

8. Ventilator nach Anspruch 7, bei welchem der Abstand (DS) von der Kontur der Ablösezone (45) etwa ein bis zwei Prozent des Durchmessers (D) des Laufrads (34) beträgt.

## Claims

1. Axial or diagonal fan comprising an impeller (30) which is equipped with profiled moving blades (32) which each have an intake side (46), a portion that is positioned at the front when viewed in the rotation direction (36) and has an inflow edge (44), and a portion that is positioned at the rear relative to the rotation direction (36) and has an outflow edge (92), between which portions a separation edge (66) is positioned, which has a S-shaped contour in meridian section, which contour is positioned within a strip (B) which is measured, starting from said inflow edge (44), within a range of from 30 % to 100 % of the length (L) of a moving blade (32),
wherein the separation edge (66) extends from the radially inner side of a moving blade (32) to the radially outer side of said moving blade (32) approximately in an elongate S shape.

2. Fan according to claim 1, wherein the strip (B) is defined by boundary lines (100, 102) which, together with a line (101) that extends across the relevant moving blade (32) radially with respect to the impeller (30), enclose an angle (α) which is in a range of between about 0° and about 30° relative to said line (101).

3. Fan according to either claim 1 or claim 2, wherein the separation edge (66) is designed as a step in the intake side (46) of the corresponding moving blade (32).

4. Fan according to any of claims 1 to 3, wherein the separation edge (66) extends from the radially inner side of a moving blade (32), on the intake side (46) thereof, in the direction of the radially outer side of said moving blade (32).

5. Fan according to any of the preceding claims, wherein the elongate S of the separation edge (66) extends on its radially inner side as far as a region (68) of the corresponding moving blade (32) which is in the centre relative to the circumferential extension of said separation edge.

6. Fan according to any of the preceding claims, wherein the elongate S extends on its radially outer side as far as a region of the moving blade (32) which is positioned between the outflow edge (92) thereof and a central region of the circumferential extension of the moving blade (32).

7. Fan according to any of the preceding claims, which is designed for a predetermined operating point and wherein the separation edge (66) predominantly extends at a spacing (DS) from the contour of a separation zone (45) and extends outside of the separation zone (45) at least over the majority of its longitudinal extension, which separation zone (45) comprises a corresponding fan in the predetermined operating point which has moving blades (32old) without separation edges (66).

8. Fan according to claim 7, wherein the spacing (DS) from the contour of the separation zone (45) is approximately one to two percent of the diameter (D) of the impeller (34).

## Revendications

1. Ventilateur axial ou diagonal, comportant un rotor (30) muni de pales profilées (32) comprenant, à chaque fois, un côté aspiration (46), un tronçon muni d'un bord d'attaque (44) et placé à l'avant observé dans la direction de rotation (36), et un tronçon pourvu d'un bord de fuite (92) et placé à l'arrière par rapport à ladite direction de rotation (36), arêtes entre lesquelles se trouve une arête de clivage (66) dotée d'un profil configuré en S en coupe méridienne, lequel profil est situé à l'intérieur d'une bande (B) qui, mesurée à partir dudit bord d'attaque (44), est incluse dans les limites d'une plage représentant de 30 % à 100 % de la longueur (L) d'une pale (32),
sachant que ladite arête de clivage (66) s'étend sensiblement sous la forme d'un S allongé, depuis le côté radialement intérieur d'une pale (32) jusqu'au côté radialement extérieur de cette pale (32).

2. Ventilateur selon la revendication 1, dans lequel la bande (B) est définie par des lignes de délimitation (100, 102) qui décrivent avec une ligne (101) passant par la pale (32) considérée, dans le sens radial vis-à-vis du rotor (30), un angle (α) mesurant entre environ 0° et environ 30° par rapport à cette ligne (101).

3. Ventilateur selon la revendication 1 ou 2, dans lequel l'arête de clivage (66) est réalisée sous la forme d'un gradin dans le côté aspiration (46) de la pale (32) associée.

4. Ventilateur selon l'une des revendications 1 à 3, dans lequel l'arête de clivage (66) s'étend à partir du côté radialement intérieur d'une pale (32), sur le côté aspiration (46) de cette dernière, en direction du côté radialement extérieur de cette pale (32).

5. Ventilateur selon l'une des revendications précédentes, dans lequel le S allongé de l'arête de clivage (66) s'étend, sur son côté radialement intérieur, jusqu'à une région (68) de la pale (32) associée qui occupe une position médiane par rapport à l'étendue périphérique dudit côté.

6. Ventilateur selon l'une des revendications précédentes, dans lequel le S allongé s'étend, sur son côté radialement extérieur, jusqu'à une région de la pale (32) qui est interposée entre le bord de fuite (92) de cette dernière et une région médiane de l'étendue périphérique de ladite pale (32).

7. Ventilateur selon l'une des revendications précédentes, conçu pour un point de fonctionnement préétabli, ventilateur dans lequel l'arête de clivage (66) s'étend majoritairement à une distance (DS) du profil d'une zone de clivage (45) et à l'extérieur de ladite zone de clivage (45), au moins sur une part prépondérante de son étendue longitudinale, un ventilateur correspondant, doté de pâles (32old) dépourvues d'arête de clivage (66), présentant ladite zone de clivage (45) audit point de fonctionnement préétabli.

8. Ventilateur selon la revendication 7, dans lequel la distance (DS), vis-à-vis du profil de la zone de clivage (45), mesure d'environ un à deux pour cent du diamètre (D) du rotor (30).
